# EUROPÄISCHE PATENTANMELDUNG

(11) **EP 2 355 412 A1**
(43) Veröffentlichungstag der Anmeldung: **10.08.2011**
(21) Anmeldenummer: 10006494.8
(22) Anmeldetag: 22.06.2010
(51) Int. Cl.: H04L 12/26, G01F 19/00

(54) **Verfahren und Vorrichtung zum Bewerten einer elektrischen Anlage eines elektrischen Energiesystems**

(30) Priorität: 05.02.2010 EP 10001233
(71) Anmelder: Omicron electronics GmbH, 6833 Klaus (AT)
(72) Erfinder: Steinhauser, Fred, Dr., 6833 Klaus (AT); Marinescu, Cristian, Dr., 6850 Dornbirn (AT)
(74) Vertreter: Banzer, Hans-Jörg

(57) **Zusammenfassung**

Die vorliegende Erfindung betrifft ein Verfahren zum Bewerten einer elektrischen Anlage (1981-2211) eines elektrischen Energiesystems (1000, 1600). Die elektrische Anlage (1981,-2211) umfasst ein Kommunikationsnetzwerk (2111, 2211) zum Übertragen von Daten. Bei dem Verfahren werden Echtzeitdatenübertragungen in dem Kommunikationsnetzwerk (2111, 2211) automatisch erfasst und die elektrische Anlage (1981-2211) anhand der erfassten Echtzeitdatenübertragungen automatisch bewertet. Weiterhin wird das Verhalten einer Abtasteinheit, einer Merging Unit oder eines SV-Senders (7) anhand der erfassten Echtzeitdatenübertragungen automatisch bewertet.

## Beschreibung

Die vorliegende Erfindung betrifft ein Verfahren und eine Vorrichtung zum Bewerten einer elektrischen Anlage eines elektrischen Energiesystems. Die vorliegende Erfindung betrifft insbesondere elektrische Anlagen, in denen Echtzeitdaten, beispielweise Abtastwerte, sogenannte Sampled Values, gemäß IEC 61850, in einem Kommunikationsnetzwerk übertragen werden und daher insbesondere ein Verfahren und eine Vorrichtung zum Bewerten des Kommunikationsnetzwerks und seiner Komponenten.

### Hintergrund der Erfindung

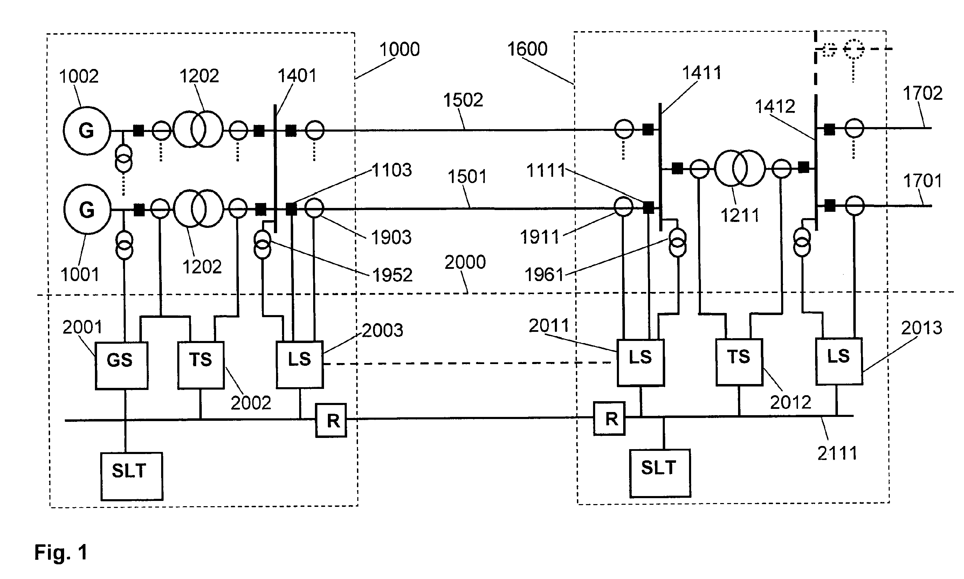

Figur 1 zeigt schematisch und stark vereinfacht wesentliche Elemente eines beispielhaften Teilsystems eines elektrischen Energiesystems. Die elektrische Energie fließt in der Figur 1 von links nach rechts, von einer Energieerzeugungsanlage 1000, einem sogenannten "Kraftwerk", über Hochspannungs-Übertragungsleitungen 1501, 1502 zu einer Umspannanlage 1600, einem sogenannten "Umspannwerk". Die elektrische Energie wird in Generatoren 1001 und 1002 erzeugt und in Leistungstransformatoren 1201 und 1202 auf Hochspannung transformiert. Solche, einem Generator zugeordneten Leistungstransformatoren werden auch Blocktransformatoren oder Maschinentransformatoren genannt. Die Energie wird von den Blocktransformatoren 1201, 1202 auf eine Sammelschiene 1401 geleitet, von wo sie auf Hochspannungsübertragungsleitungen 1501, 1502 weiter verteilt wird. Die Hochspannungsübertragungsleitung 1501, 1502 ist hier als Doppelleitung ausgebildet. Eine solche Doppelleitung wird in der Praxis meist gemeinsam auf einem Mastsystem geführt. Die Nennströme auf der Hochspannungsebene liegen im Bereich von mehreren Hundert bis mehreren Tausend Ampere, die Nennspannungen reichen von einigen Zehntausend bis zu einer Million Volt. In der Umspannanlage 1600 werden die ankommenden Leitungen 1501, 1502 wieder auf einer Sammelschiene 1411 zusammengefasst. Die an der Sammelschiene 1411 anstehende elektrische Energie wird mit einem Leistungstransformator 1211 auf eine andere Spannungsebene transformiert und an eine Sammelschiene 1412 geliefert. Von der Sammelschiene 1412 wird die Energie über Leitungen 1701, 1702 weiter verteilt. Figur 1 zeigt ein so genanntes Einleiter-Ersatzschaltbild. Das elektrische Energiesystem ist jedoch üblicherweise ein Dreiphasensystem. Somit stehen die dargestellten Elemente für dreiphasige Ausführungen, so besteht beispielsweise die als eine Linie dargestellte Leitung 1501 in Wirklichkeit aus drei Leitern.

In den zuvor beschriebenen sogenannten primärtechnischen Elementen findet somit die Erzeugung, die Übertragung und die Verteilung der elektrischen Energie statt, d.h. die primärtechnischen Elemente führen die Primärströme und Primärspannungen, welche zusammen als Primärgrößen bezeichnet werden. Die primärtechnischen Elemente werden zusammen auch als Primärsystem bezeichnet. Parallel zum Primärsystem gibt es ein weiteres sogenanntes Sekundärsystem, das aus Schutz- und Steuergeräten besteht. Die Elemente oberhalb einer symbolischen Trennlinie 2000 in Figur 1 gehören zum Primärsystem, die Elemente unterhalb der Trennlinie 2000 zum sekundärtechnischen Schutz- und Steuerungssystem. Eine Zwischenstellung nehmen Wandler 1903, 1911, 1952, 1961 ein. Sie sind einerseits an das Primärsystem und andererseits an das Sekundärsystem angeschlossen und können somit nicht eindeutig zugeordnet werden.

Unterhalb der Trennlinie 2000 sind verschiedene Schutzgeräte dargestellt, zum Beispiel ein Generatorschutz (GS) 2001, ein Transformator-Differenzialschutz (TS) 2002, 2012 und ein Leitungsschutz (LS) 2003, 2011, 2013. In der Figur 1 sind zur Wahrung der Übersichtlichkeit nur Schutzgeräte eingezeichnet, Steuergeräte wären auf derselben Ebene angeordnet. Die Schutz- und Steuergeräte können nicht direkt an die Hochspannung führenden Primärelemente angeschlossen werden, um Information über die Größen im Primärsystem zu erhalten. Deshalb liefern die Wandler normierte Abbilder der Primärgrößen, die so genannten Sekundärgrößen, an die Schutz- und Steuergeräte. Die Übersetzungen der Stromwandler, z.B. 1903, 1911, sind so ausgelegt, dass sie Sekundärströme von 1A oder 5A liefern, wenn im Primärsystem Nennstrom fließt. Die Spannungswandler, z.B. 1952, 1961, liefern eine Sekundärspannung von 100V (in manchen Teilen der Welt auch 110V, 115V, 120V) bei Nennspannung im Primärsystem.

Über die Schutz- und Steuergeräte werden auch weitere Elemente des Primärsystems betätigt. Insbesondere können die Schutzgeräte bei Erkennen eines Fehlers beispielsweise Leistungsschalter auslösen und somit den Stromfluss unterbrechen. In Figur 1 ist dies beispielhaft für die beiden Leitungsschutzgeräte 2003 und 2011 und ihren zugeordneten Leistungsschaltern 1103 und 1111 eingezeichnet. Die Leistungsschalter 1103, 1111 können den Stromfluss durch die Primärelemente unterbrechen. Dies gilt insbesondere auch im Fehlerfall, wenn Fehlerströme fließen, welche die normalen Betriebsströme um ein Mehrfaches überschreiten. Nicht eingezeichnet sind in realen Anlagen ebenfalls vorhandene Trennschalter. Diese sind in der Regel bei den Leistungsschaltern angeordnet und dienen der Herstellung von ausreichend großen Trennstrecken, um einzelne Anlagenteile sicher von spannungsführenden Anlagenteilen zu trennen. Die Stellung dieser Trennschalter ist für das Bedienpersonal eindeutig erkennbar, um sicheres Arbeiten an freigeschalteten Anlagenteilen zu ermöglichen. Diese Trennschalter sind nicht in der Lage, einen Stromfluss zu unterbrechen, weder einen normalen Betriebsstrom noch einen Fehlerstrom. Ein Trennschalter darf also nur betätigt werden, wenn der entsprechende Leistungsschalter den Stromfluss unterbrochen hat, d.h., wenn er geöffnet ist.

Die Schutzgeräte werten die Ströme und Spannungen und gegebenenfalls noch weitere Informationen aus dem Primär- und Sekundärsystem aus und ermitteln, ob ein normaler Betriebszustand oder ein Fehler vorliegt. Im Fehlerfall ist ein als fehlerhaft erkannter Anlagenteil so rasch wie möglich abzuschalten, indem die entsprechenden Leistungsschalter ausgelöst werden. Die Schutzgeräte sind auf verschiedene Aufgaben spezialisiert. Der Generatorschutz 2001 wertet neben den Strömen und Spannungen am Generator noch viele weitere Größen aus. Der Transformator-Differenzialschutz 2002, 2012 wendet die Kirchhoffsche Knotenregel auf die Ströme am Leistungstransformator 1201, 1211 an. Der Leitungsschutz 2003, 2011, 2013 betrachtet Ströme und Spannungen an den Leitungsenden und führt z.B. eine Impedanzmessung durch. Nicht eingezeichnet ist ein Sammelschienenschutz, der für den Schutz der Sammelschienen 1401, 1411, 1412 zum Einsatz kommen kann. Der Sammelschienenschutz wendet die Kirchhoffsche Knotenregel auf die zu- und abfließenden Ströme an der Sammelschiene an. Viele Schutzgeräte sind heutzutage multifunktional, d.h. sie können mehrere Schutzfunktionen enthalten und insbesondere auch Steuerfunktionen ausführen (kombinierte Schutz- und Steuergeräte).

Die Gewinnung von Informationen von dem Primärsystems und die Beeinflussung des Primärsystems erfolgt in Figur 1 über die sogenannten klassischen Schnittstellen. Es handelt sich um analoge Messgrößen und direkt verdrahtete binäre Informationen, d.h., die Sekundärgrößen von den Wandlern, Schaltzustände von Meldekontakten oder Betätigungsenergien für Aktuatoren.

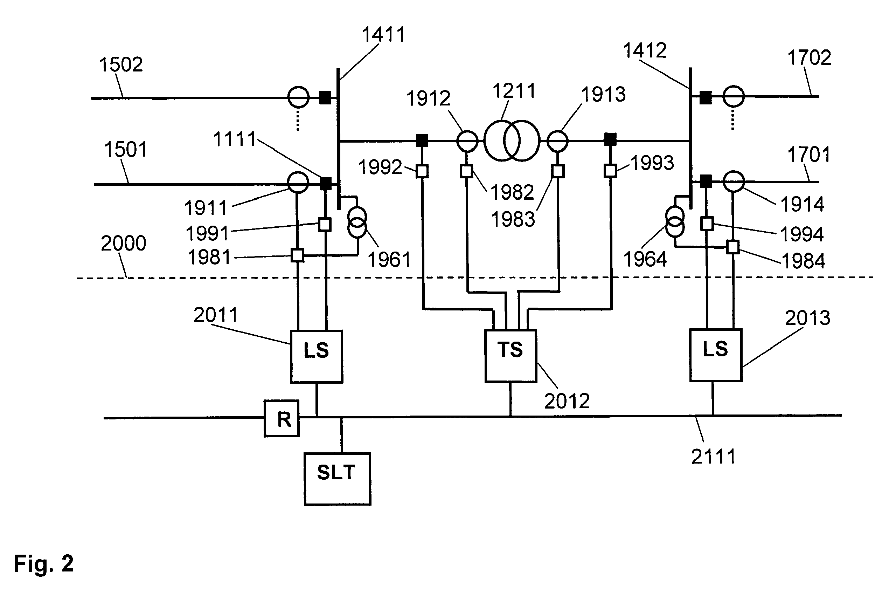

Bei einem neueren System, wie es beispielhaft in Figur 2 gezeigt ist, werden die klassischen Schnittstellen, also die Sekundärgrößen und die direkt verdrahteten Verbindungen zwischen den Schutzgeräten und Primärelementen, ersetzt. Dazu werden sogenannte intelligente Einheiten (IED, Intelligent Electronic Devices) 1981-1984, 1991-1994 möglichst direkt an den Primärelementen angebracht, welche einerseits Zugriff auf die Primärgrößen haben und andererseits über Netzwerkprotokolle mit den Schutz- und Steuergeräten kommunizieren. Figur 2 zeigt eine solche Architektur für die Schaltanlage 1600 aus Figur 1. Sogenannte Merging Units 1981-1984 digitalisieren die Messwerte von den Strom- und Spannungssensoren 1911-1914, 1961, 1964 und stellen diese als Abtastwerte über eine Netzwerkschnittstelle den Schutzgeräten zur Verfügung. Die Sensoren können hierbei auf beliebigen physikalischen Prinzipien beruhen. Ein vereinheitlichtes Protokoll zwischen Merging Unit und Schutzgerät stellt die Interoperabilität her. Diese Abtastwerte können beispielsweise Sampled Values gemäß der Norm IEC 61850 bzw. gemäß der Implementierungsrichtlinie "Implementation Guideline for Digital Interface to Instrument Transformers using IEC 61850-9-2" sein. Die intelligenten Steuereinheiten 1991-1994 erfassen Zustände der Primärelemente und betätigen Aktuatoren in den Primärelementen. In Figur 2 sind beispielhaft Leistungsschaltersteuergeräte dargestellt, bei denen die erfassten Zustände die Schalterstellung und z.B. das momentane Schaltvermögen sind und die betätigten Aktuatoren die Auslösespulen und Schalterantriebe sind. Zur Weitergabe der erfassten Zustände an die Schutz- und Steuergeräte oder zur Entgegennahme von Befehlen von den Schutz- und Steuergeräten verwenden diese intelligenten Steuereinheiten ebenfalls Protokolle über Netzwerkschnittstellen. Für den Austausch solcher Informationen eignen sich ereignisgesteuerte Telegramme, deren Informationsinhalt nur bei einer Änderung der Zustände und Befehle aktualisiert und versendet wird. Diese ereignisgesteuerten Telegramme können beispielsweise sogenannte GOOSE Nachrichten gemäß der Norm IEC 61850 sein.

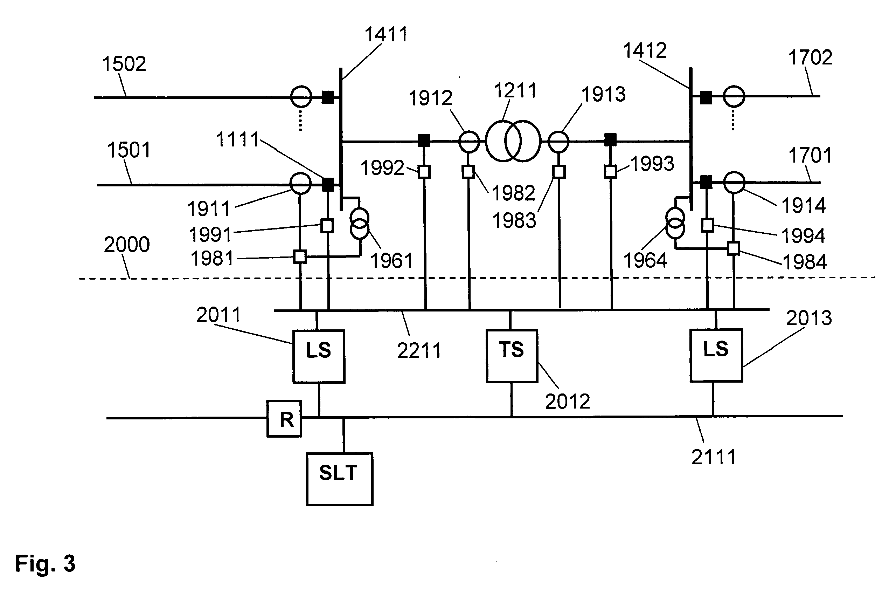

Während in Figur 2 die Informationen zwischen den Merging Units 1981-1984 und den intelligenten Steuereinheiten 1991-1994 einerseits und den Schutz- und Steuergeräten 2011-2013 andererseits über Punkt-zu-Punkt Verbindungen ausgetauscht werden, zeigt Figur 3 eine Architektur, in welcher diese Informationen über ein weiteres Netzwerk 2211 gesammelt und verteilt werden. Das Netzwerk 2211 wird auch "Prozessbus" genannt, während ein Netzwerk 2111 oft auch "Stationsbus" genannt wird. Dabei ist die Trennung dieser Netzwerke (Busse) und die Art der ausgetauschten Informationen nicht immer ganz scharf und eindeutig. So können ereignisgesteuerte Meldungen (GOOSE Nachrichten) auf dem Stationsbus ebenfalls sinnvoll eingesetzt werden, auch in Architekturen gemäß Figur 1. Auch können Prozessbus und Stationsbus in einem physikalischen Netzwerk verschmelzen, wenn das Datenaufkommen bewältigt werden kann. Auf jeden Fall ergeben sich durch das Netzwerk 2211 mehr sinnvolle Kommunikationsbeziehungen, als durch die Punkt-zu-Punkt Verbindungen der Figur 2 hergestellt werden können. Damit werden neue Anwendungen für Schutz- und Steuerfunktionen ermöglicht. So könnte z.B. der Transformatorschutz 2012 über die Abtastwerte von den Merging Units 1981 und 1984 die Spannungen an den Sammelschienen 1411 und 1412 betrachten und eine Zuschaltung des Transformators 1211 von deren Phasenlage zueinander abhängig machen.

Die Norm "Communication networks and systems in substations - Part 9-2: Specific Communication Service Mapping (SCSM) - Sampled values over ISO/IEC 8802-3" (IEC61850-9-2) ergänzt den Teil 7-2 der Norm IEC 61850 mit der entsprechenden Abbildung des Sampled Values Modells, und wird im Bereich der elektrischen Strom- und Spannungswandler mit digitalem Ausgang, Merging Units (MU) oder IEDs (Intelligent Electronic Devices) wie zum Beispiel Schutzeinrichtungen, Feldleitgeräte oder Zähler eingesetzt. Als Teil der Spezifikation der Kommunikation auf dem Prozessbus 2211, definiert die Norm die Abbildung des Abtastwertemodells (wie z.B. momentane Werte von Strömen und Spannungen in Form von Netzwerkpaketen), und ermöglicht die Interoperabilität zwischen Geräten unterschiedlicher Hersteller. Die Richtlinie "Implementation Guideline for Digital Interface to Instrument Transformers using IEC 61850- 9-2" (bekannt auch unter der Abkürzung 9-2LE) detailliert wie eine digitale Kommunikationsschnittstelle laut IEC 61850-9-2 implementiert werden muss, um die Verbreitung der Norm und der IEC 61850-9-2 Implementierungen in Produkten zu unterstützen. Das Dokument spezifiziert eine Untermenge aller Möglichkeiten, die der Standard erlaubt, und klärt Undeutlichkeiten, die durch die Interpretation des Standards verursacht werden könnten. Die in der Richtlinie definierte Untermenge der IEC 61850 unterstützt nur die Funktion SendMSVMessage. Aus diesem Grund verläuft die Kommunikation unidirektional von der MU zu den Feldgeräten und muss keine weitere Steuerschnittstelle unterstützen. Weiterhin spezifiziert das Dokument das logische Gerät "Merging Unit". Die Richtlinie spezifiziert 80 Abtastwerte (samples) pro Periode für 50Hz und 60Hz (4000 bzw. 4800 Pakete pro Sekunde), das entspricht einem Paket alle 250µs bzw. 208,33µs. Eine wichtige Prüfung ist die Überprüfung der zeitlichen Verteilung der Pakete, eine Überschreitung der maximalen Zeitgrenze muss als Fehler bewertet werden (z.B. spezifiziert die 9-2LE eine maximale Grenze von 3,3ms). Ein synchronisierter Modus definiert die Abtastfrequenz innerhalb der Sekunde so, dass das Paket mit dem Index 0 immer am Anfang der Sekunde verschickt werden sollte. Die Genauigkeit der Synchronisierung wird auf 4µs festgelegt.

Für den sicheren und leistungsstarken Betrieb von Anlagen, wie sie in Figur 1 bis 3 beschrieben wurden, ist es daher notwendig, dass gewisse Leistungswerte der Kommunikation, also der involvierten Geräte und der Verbindung dazwischen (des Kommunikationsnetzwerkes), sichergestellt und verifiziert werden. Beispielweise ist es bei einer Inbetriebnahme einer IEC 61850-9-2 fähigen elektrischen Anlage notwendig, die Qualität bzw. das zeitliche Verhalten der eingebauten MUs oder der Datenströme von Sampled Values (SV) im Netzwerk zu beurteilen. Es gibt zurzeit keine Methoden, um ein wie in der Richtlinie spezifiziertes zeitliches Verhalten einer MU oder die Qualität eines SV Streams zu überprüfen. Weiterhin gibt es kein Messverfahren, um die Qualität oder die Synchronisierung eines SV Datenstroms zu bewerten.

Aufgabe der vorliegenden Erfindung ist es daher, Verfahren und Vorrichtungen bereitzustellen, welche eine Beurteilung der Qualität bzw. des zeitlichen Verhaltens von Echtzeitdaten in einem Kommunikationsnetzwerk einer elektrischen Anlage sowie eine Beurteilung einer Netzwerkarchitektur ermöglichen.

Diese Aufgabe wird erfindungsgemäß durch ein Verfahren zum Bewerten einer elektrischen Anlage eines elektrischen Energiesystems nach Anspruch 1 und eine Vorrichtung zum Bewerten einer elektrischen Anlage eines elektrischen Energiesystems nach Anspruch 15 gelöst. Die abhängigen Ansprüche definierten bevorzugte und vorteilhafte Ausführungsformen der Erfindung.

Gemäß der vorliegenden Erfindung wird ein Verfahren zum Bewerten einer elektrischen Anlage eines elektrischen Energiesystems bereitgestellt. Die elektrische Anlage umfasst ein Kommunikationsnetzwerk zum Übertragen von Daten. Bei dem Verfahren werden Echtzeitdatenübertragungen in dem Kommunikationsnetzwerk automatisch erfasst und die elektrische Anlage anhand der erfassten Echtzeitdatenübertragungen automatisch bewertet.

Durch das automatische Erfassen der Echtzeitdatenübertragungen in dem Kommunikationsnetzwerk kann beispielsweise eine Abfolge von übertragenen Daten analysiert werden und daraus beispielsweise ermittelt werden, ob Daten fehlen, d.h. ob Daten auf dem Kommunikationsnetzwerk verloren gegangen sind.

Gemäß einer Ausführungsform wird den erfassten Echtzeitdatenübertragungen jeweils automatisch eine Zeitinformation zugeordnet. Das Kommunikationsnetzwerk der elektrischen Anlage kann somit zusätzlich anhand der Zeitinformation der erfassten Echtzeitdatenübertragungen automatisch bewertet werden. Beispielsweise kann eine statistische Verteilung der Echtzeitdatenübertragungen anhand ihrer Zeitinformation automatisch bestimmt werden, um eine Information über die Auslastung des Kommunikationsnetzwerks zu bekommen. Weiterhin können die Echtzeitdatenübertragungen jeweils automatisch an mindestens zwei verschiedenen Stellen des Kommunikationsnetzwerks erfasst werden. Somit kann beispielsweise ermittelt werden, in welchen Abschnitten des Kommunikationsnetzwerks Echtzeitdatenübertragungen verloren gehen oder Verzögerungen bei der Echtzeitdatenübertragung entstehen. Weiterhin kann beispielsweise ein zeitlicher Abstand zwischen aufeinander folgenden Echtzeitdatenübertragungen erfasst werden, wodurch eine Auslastung und Kapazität der Architektur des Kommunikationsnetzwerks bestimmt werden kann.

Gemäß einer Ausführungsform bildet eine Abtasteinheit der elektrischen Anlage einen Echtzeitabtastwert durch Abtasten einer elektrischen Größe des elektrischen Energiesystems. Die Abtasteinheit überträgt den Echtzeitabtastwert als Echtzeitdatenübertragung über das Kommunikationsnetzwerk. Den erfassten Echtzeitdatenübertragungen kann jeweils automatisch eine Zeitinformation beim Verlassen der Abtasteinheit zugeordnet werden. Somit kann die Abtasteinheit der elektrischen Anlage anhand der Zeitinformation der erfassten Echtzeitdatenübertragungen automatisch bewertet werden. Beispielsweise können fehlende Echtzeitdatenübertragungen erkannt werden oder festgestellt werden, ob ein Zeitabstand zwischen nacheinander folgenden Echtzeitdatenübertragungen einen oberen definierten Grenzwert überschreitet. Weiterhin kann eine statistische Verteilung der Echtzeitdatenübertragungen bestimmt werden und daraus eine Qualität des Stroms von Echtzeitdatenübertragungen der Abtasteinheit bestimmt werden.

Gemäß einer weiteren Ausführungsform umfasst die Abtasteinheit eine Sammeleinheit, welche ausgestaltet ist, mehrere Echtzeitabtastwerte von mehreren elektrischen Größen des elektrischen Energiesystems abzutasten und als Echtzeitdatenübertragung über das Kommunikationsnetzwerk zu übertragen. Die Sammeleinheit kann beispielsweise eine so genannte Merging Unit gemäß IEC 61850 umfassen. Wie zuvor im Zusammenhang mit der Bewertung der Qualität der Abtasteinheit beschrieben wurde, kann so ebenso eine Qualität der Merging Unit bestimmt werden. Darüber hinaus kann auch die Qualität einer Sendevorrichtung (eines sogenannten SV-Senders) der Abtasteinheit oder der Merging Unit, welche die Abtastwerte an das Kommunikationsnetzwerk ausgibt, automatisch bewertet werden.

Gemäß einer Ausführungsform werden die übertragenen Echtzeitdatenübertragungen von einer Netzwerkzugangsvorrichtung erfasst. Die Netzwerkzugangsvorrichtung und die Abtasteinheit werden mit einer gemeinsamen Zeitquelle synchronisiert und die Netzwerkzugangsvorrichtung ordnet den Echtzeitdatenübertragungen jeweils eine Zeitinformation zu. Dadurch kann ein zeitlicher Abstand zwischen dem Abtastzeitpunkt eines analogen Wertes der elektrischen Anlage und einem Sendezeitpunkt, zu dem die Abtasteinheit eine entsprechende Echtzeitdatenübertragung aussendet, festgestellt werden. Dieser Zeitpunkt ist genau genommen der Empfangszeitpunkt in der Netzwerkzugangsvorrichtung. Bei geeigneter Ausgestaltung der Messanordnung, sind aber der Sendezeitpunkt und der Empfangszeitpunkt praktisch identisch. Dadurch kann beispielsweise die Qualität einer Abtasteinheit, einer Merging Unit oder einer Synchronisierung der Abtasteinheit oder der Merging Unit bewertet werden.

Gemäß einer weiteren Ausführungsform wird ein Referenzsignal bereitgestellt, welches eine Referenzzeitinformation umfasst. Die Referenzzeitinformation erscheint als definierte Phasenlage bei sinusförmigen Größen oder als genauer Zeitpunkt einer Änderung des Referenzsignals bei nicht sinusförmigen Größen. Die Abtasteinheit tastet das Referenzsignal ab und überträgt die entsprechenden Echtzeitabtastwerte als Echtzeitdatenübertragungen über das Kommunikationsnetzwerk. Die elektrische Anlage wird anhand eines Vergleichs der Referenzzeitinformation mit der Zeitinformation der Echtzeitdatenübertragung automatisch bewertet. Dadurch kann eine Zeitsynchronität der Abtasteinheit oder der Merging Unit bewertet werden.

Gemäß einer weiteren Ausführungsform umfasst das Referenzsignal zusätzliche einen Referenzwert. Anhand eines Vergleichs von Echtzeitabtastwerten der Echtzeitdatenübertragungen mit dem Referenzwert kann die elektrische Anlage, insbesondere eine Wandlergenauigkeit der Abtasteinheit oder der Merging Unit, automatisch bewertet werden.

Das Referenzsignal kann beispielsweise von einem Schutzprüfgerät bereitgestellt werden, welches eine ideale Abtasteinheit simuliert und welches mit der Zeitquelle synchronisiert wird, mit welcher die Abtasteinheit oder die Merging Unit synchronisiert wird. Durch einen Vergleich der übertragenen Echtzeitdatenübertragungen mit Referenzausgaben des Schutzprüfgerätes, welches eine genaue Zeitinformation und Größeninformation des Referenzsignals bereitstellt, kann eine Wandlergenauigkeit der Abtasteinheit oder der Merging Unit, eine Wandlergeschwindigkeit der Abtasteinheit oder der Merging Unit und eine Übertragungsgeschwindigkeit des Kommunikationsnetzwerks bewertet werden.

Gemäß einem weiteren Aspekt der vorliegenden Erfindung wird eine Vorrichtung zum Bewerten einer elektrischen Anlage eines elektrischen Energiesystems bereitgestellt. Die elektrische Anlage umfasst ein Kommunikationsnetzwerk zum Übertragen von Daten. Die Vorrichtung umfasst eine Netzwerkzugangsvorrichtung und eine Bewertungsvorrichtung. Die Netzwerkzugangsvorrichtung ist mit dem Kommunikationsnetzwerk koppelbar und zum Erfassen von Echtzeitdatenübertragungen in dem Kommunikationsnetzwerk ausgestaltet. Der Bewertungsvorrichtung werden von der Netzwerkzugangsvorrichtung die Echtzeitdatenübertragungen bereitgestellt. Die Bewertungsvorrichtung ist ausgestaltet, die elektrische Anlange anhand der Echtzeitdatenübertragungen zu bewerten.

Die elektrische Anlage umfasst beispielsweise eine oder mehrere Abtasteinheiten, welche ausgestaltet sind, Echtzeitabtastwerte durch Abtasten einer elektrischen Größe des elektrischen Energiesystems zu bilden und als Echtzeitdatenübertragungen über das Kommunikationsnetzwerk zu übertragen.

Die Abtasteinheit kann ferner eine Sammeleinheit umfassen, welche ausgestaltet ist, mehrere Echtzeitabtastwerte von mehreren elektrischen Größen des elektrischen Energiesystems abzutasten und als Echtzeitdatenübertragungen über das Kommunikationsnetzwerk zu übertragen. Die Sammeleinheit kann beispielsweise eine Merging Unit gemäß IEC 61850 umfassen. Die Echtzeitdatenübertragungen können beispielsweise so genannte "Sampled Values" gemäß IEC 61850 umfassen. Weiterhin kann die Vorrichtung eine Zeitquelle umfassen, welche geeignet ist, die Abtasteinheit und die Netzwerkzugangsvorrichtung zu synchronisieren. Durch die Synchronisation der Abtasteinheit und der Netzwerkzugangsvorrichtung kann die Qualität der Abtasteinheit oder der Sammeleinheit bewertet werden, indem z.B. ein Zeitabstand zwischen aufeinander folgenden Echtzeitdatenübertragungen ermittelt wird und eine statistische Verteilung der Echtzeitdatenübertragungen bestimmt wird.

Gemäß einer Ausführungsform umfasst die Vorrichtung ein Schutzprüfgerät, welches in der Lage ist, ein Referenzsignal bereitzustellen, welches einen Referenzwert mit einer zugeordneten Referenzzeitinformation umfasst. Die Abtasteinheit tastet das Referenzsignal ab und überträgt den entsprechenden Echtzeitabtastwert als Echtzeitdatenübertragung über das Kommunikationsnetzwerk. Die elektrische Anlage wird anhand eines Vergleichs der Referenzzeitinformation mit der Zeitinformation der Echtzeitdatenübertragung automatisch bewertet.

Gemäß einer weiteren Ausführungsform simuliert das Schutzprüfgerät eine ideale Abtasteinheit. Das Schutzprüfgerät und die Abtasteinheit werden mit der Zeitquelle synchronisiert.

Die Vorrichtung kann ferner derart ausgestaltet sein, dass sie zum Durchführen des zuvor beschriebenen Verfahrens und seiner Ausführungsformen geeignet ist. Daher umfasst die Vorrichtung auch die zuvor beschriebenen Vorteile des zuvor beschriebenen Verfahrens und seiner Ausführungsformen.

Die vorliegende Erfindung wird nachfolgend unter Bezugnahme auf die Zeichnungen anhand bevorzugter Ausführungsformen erläutert werden.
Fig. 1 zeigt schematisch Elemente eines beispielhaften Teilsystems eines elektrischen Energiesystems gemäß dem Stand der Technik.
Fig. 2 zeigt schematisch ein weiteres beispielhaftes Teilsystem eines elektrischen Energiesystems gemäß dem Stand der Technik.
Fig. 3 zeigt schematisch noch ein weiteres beispielhaftes Teilsystem eines elektrischen Energiesystems gemäß dem Stand der Technik.
Fig. 4 zeigt eine Vorrichtung zum Bewerten einer elektrischen Anlage eines elektrischen Energiesystems gemäß einer Ausführungsform der vorliegenden Erfindung.
Fig. 5 zeigt eine weitere Ausführungsform einer Vorrichtung zum Bewerten einer elektrischen Anlage eines elektrischen Energiesystems gemäß der vorliegenden Erfindung.

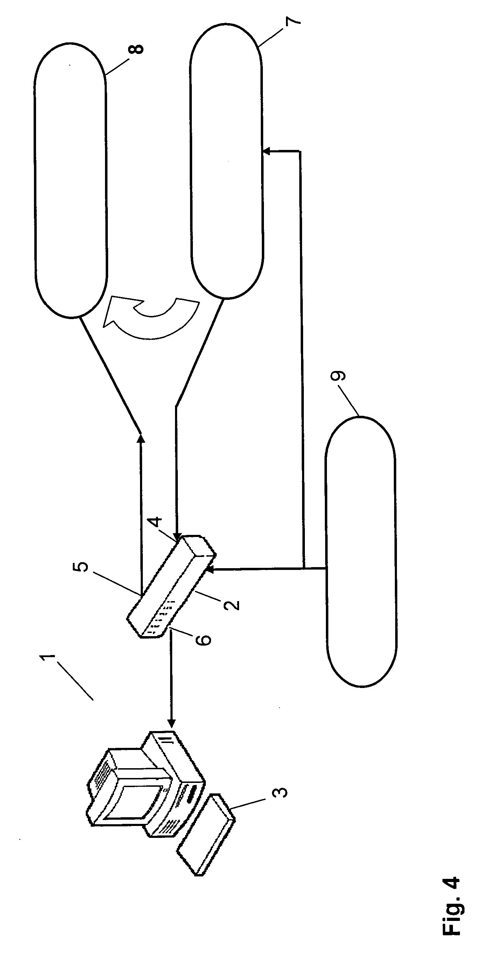

Fig. 4 zeigt eine Vorrichtung 1 zum Bewerten einer elektrischen Anlage eines elektrischen Energiesystems, wie es beispielsweise in Fig. 3 gezeigt ist. Die Vorrichtung 1 umfasst eine Netzwerkzugangsvorrichtung 2 und eine Bewertungsvorrichtung 3. Die Bewertungsvorrichtung 3 ist beispielsweise ein Computer mit einer geeigneten Analyse- und Bewertungssoftware. Zur Bewertung der elektrischen Anlage des elektrischen Energiesystems, insbesondere zur Bewertung einer Kommunikationsinfrastruktur und einzelner Komponenten der Kommunikationsinfrastruktur, ist die Netzwerkzugangsvorrichtung 2 mit der elektrischen Anlage des elektrischen Energiesystems gekoppelt. Die Netzwerkzugangsvorrichtung 2 wird auch Netzwerkzugangspunkt oder auch Netzwerk TAP (Test Access Port) genannt. Der Netzwerk TAP ist eine Hardware, die es ermöglicht, einen Netzwerkverkehr zwischen zwei oder mehreren Netzwerkknoten zu beobachten. Der Netzwerk TAP besitzt üblicherweise mindestens drei Anschlüsse 4-6. Zur Beobachtung eines Netzwerkverkehrs zwischen zwei Netzwerkknoten 7 und 8 wird beispielsweise ein Netzwerkkabel zwischen dem Netzwerkknoten 7 und dem Netzwerkknoten 8 durch den Netzwerk TAP 2 und zwei neue Netzwerkkabel ersetzt, wodurch der Netzwerk TAP in die Verbindung zwischen dem Netzwerkknoten 7 und dem Netzwerkknoten 8 eingeschleift wird. Dazu wird der Netzwerkknoten 7 mit einem Netzwerkkabel mit dem Anschluss 4 des Netzwerk TAP 2 gekoppelt und der Netzwerkknoten 8 mit einem Netzwerkkabel mit dem Anschluss 5 des Netzwerk TAP 2 gekoppelt. Somit wird der gesamte Netzwerkverkehr vom Netzwerkknoten 7 zum Netzwerkknoten 8 und umgekehrt über den Netzwerk TAP 2 übertragen, ohne den Netzwerkverkehr zu beeinflussen. Darüber hinaus wird der gesamte Netzwerkverkehr von den Anschlüssen 4 und 5 zusätzlich zu dem Anschluss 6, einem so genannten Monitoring-Anschluss, von dem Netzwerk TAP 2 an die Bewertungsvorrichtung 3 ausgegeben. Der Netzwerkknoten 7 kann beispielsweise eine intelligente Einheit (IED) oder eine Merging Unit (MU) sein, wie sie im Zusammenhang mit den Fig. 2 und 3 zuvor beschrieben wurden. Der Netzwerkknoten 7 stellt somit beispielsweise Abtastwerte in Form von Sampled Values (SV) gemäß der Norm IEC 61850 als Echtzeitdatenübertragungen, so genannten Datenpaketen, bereit. Diese Datenpakete werden über den Netzwerk TAP 2 zu dem Netzwerkknoten 8 übertragen, welcher beispielsweise ein Schutz- oder Steuergerät umfassen kann, welches im Zusammenhang mit den Fig. 2 und 3 beschrieben wurde.

Die Komponenten 7, 8 der elektrischen Anlage, d.h. beispielsweise die intelligenten Einheiten, die Merging Units, die Schutzgeräte und die Steuergeräte, werden über ein in der elektrischen Anlage vorhandenes Zeitverteilungsprotokoll mit einer Zeitquelle 9 synchronisiert. Die Zeitverteilung kann beispielsweise gemäß IRIG-B, PPS oder IEEE1588 erfolgen. Um die einzelnen Echtzeitdatenübertragungen oder Datenpakete mit einem sehr genauen Zeitstempel versehen zu können, wird auch der Netzwerk TAP 2 mit der Zeitquelle 9 gekoppelt und synchronisiert. Die Synchronisierung erfolgt dabei beispielsweise mit einer Genauigkeit von weit unter 1 µs. Bei einem Empfang einer Echtzeitdatenübertragung, welche beispielsweise Abtastwerte umfasst, wird die Echtzeitdatenübertragung mit dem Zeitstempel versehen und von dem Netzwerk TAP 2 zu der Bewertungsvorrichtung 3 ausgegeben. Die Bewertungsvorrichtung 3 führt dann eine Analyse und Bewertung der elektrischen Anlage, d.h. der Kommunikationsinfrastruktur zwischen dem Netzwerkknoten 7 und 8 und einer Bewertung der Netzwerkknoten 7, 8 selbst durch.

Beispielsweise kann an einem Ausgang einer Merging Unit oder einer Intelligenten Einheit, welche Sampled Values (SV) aussendet, die Qualität des SV-Datenstroms bewertet werden, indem die zeitliche Abfolge der Datenpakete und deren statistische Verteilung bewertet wird. Durch Analyse der Abfolge der Pakete können beispielsweise Fehler im SV-Datenstrom erkannt werden, wie z.B. fehlende Pakete, oder dass ein Zeitabstand zwischen nacheinander folgenden SV-Paketen einen oberen definierten Grenzwert überschreitet. Weiterhin kann die Bewertungsvorrichtung 3 eine statistische Verteilung der Pakete berechnen und daraus eine Bewertung der Qualität einer Merging Unit oder eines SV-Datenstroms bestimmen. Weiterhin kann die Eignung der Kommunikationsinfrastruktur in der elektrischen Anlage für die Übertragung von SV-Daten bewertet werden. Beispielsweise kann durch ein Erfassen von Datenpaketen an einem Ausgang eines Senders, wie z.B. dem Knotenpunkt 7, und eine Erfassung beim Empfänger, beispielsweise dem Knotenpunkt 8, ein zeitliches Verhalten eines SV-Datenstroms im Netzwerk analysiert und bewertet werden, wodurch ein Einfluss einer Netzwerkarchitektur und einer Netzwerkinfrastruktur analysiert und bewertet werden kann. Zum Vergleich der Resultate an den beiden Messpunkten kann beispielsweise eine Beeinträchtigung der Qualität des SV-Datenstroms erkannt werden, beispielsweise ein Verlust von Datenpaketen oder eine Verschlechterung der statistischen Verteilung der SV-Datenpakete. Anhand dieser Informationen kann festgestellt werden, ob die vorliegende Netzwerkinfrastruktur für eine Übertragung der SV-Datenströme geeignet ist.

Durch die Synchronisierung des Netzwerk TAP 2 mit der gleichen Zeitquelle 9, mit der auch beispielsweise eine Abtasteinheit oder eine Merging Unit 7 synchronisiert wird, ist es möglich, einen zeitlichen Abstand zwischen einem Abtastzeitpunkt eines analogen Wertes durch den Netzwerkknoten 7 und einem Sendezeitpunkt einer entsprechenden Echtzeitdatenübertragung festzustellen. Beispielsweise kann eine Zeitdifferenz zwischen dem Anfang einer Sekunde und dem Abtastzeitpunkt eines Wertes mit dem Index 0, wie er in der Richtlinie 9-2LE definiert ist, erfasst werden, wodurch beispielsweise eine Synchronisierung der Netzwerkknoten bewertet werden kann.

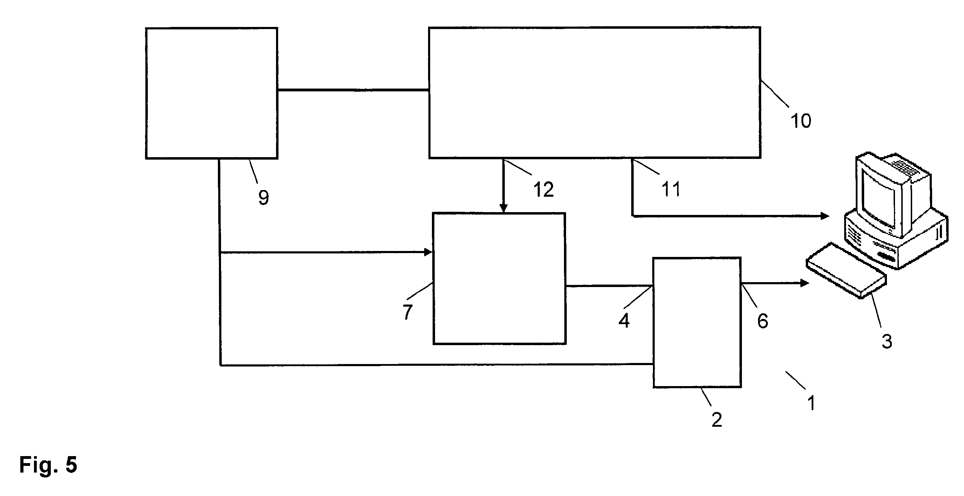

Fig. 5 zeigt eine weitere Vorrichtung 1 zur Bewertung einer elektrischen Anlage eines elektrischen Energiesystems. Die Vorrichtung 1 der Fig. 5 umfasst ebenso wie die Vorrichtung 1 der Fig. 4 den Netzwerk TAP 2 und die Bewertungsvorrichtung 3. Der Netzwerk TAP 2 ist mit einer Merging Unit 7 gekoppelt, welche dem Netzwerk TAP 2 über den Anschluss 4 Sampled Values (SV) bereitstellt. Die Merging Unit 7 und der Netzwerk TAP 2 werden mit der Zeitquelle 9 synchronisiert. Die Vorrichtung 1 umfasst ferner ein Schutzprüfgerät 10, welches einen dreiphasigen Strom-/Spannungsgenerator umfasst. Das Schutzprüfgerät 10 ist ausgestaltet, analoge Ströme und Spannungen über einen Anschluss 12 und entsprechende digitale Werte in Form eines Sampled Value Datenstroms über einen Anschluss 11 synchronisiert auszugeben. Das Schutzprüfgerät 10 ist zur Synchronisation mit der Zeitquelle 9 gekoppelt. Die analogen Ströme und Spannungen werden der Merging Unit 7 zugeführt, welche die Ströme und Spannungen abtastet und als digitalisierten SV-Datenstrom über den Netzwerk TAP 2 der Bewertungsvorrichtung 3 bereitstellt. Die entsprechenden digitalen Werte von dem Schutzprüfgerät 10 werden ebenfalls der Bewertungsvorrichtung 3 zugeführt. Das Schutzprüfgerät 10 stellt somit eine ideale Merging Unit dar, die mit der gleichen Zeitquelle 9 wie die reale Merging Unit 7 synchronisiert wird. Durch einen Vergleich des SV-Datenstroms von dem Schutzprüfgerät 10 und des SV-Datenstroms von der Merging Unit 7 kann die Genauigkeit der Merging Unit 7 festgestellt und bewertet werden. Dabei kann sowohl das Zeitverhalten der Merging Unit 7 als auch eine Abtastgenauigkeit und somit die Qualität einer Analog-Digitalwandlung der Merging Unit 7 durch den Vergleich mit den Referenzdaten von dem Schutzprüfgerät 10 bewertet werden. Anstatt der Merging Unit 7 kann in Fig. 5 eine beliebige andere intelligente Einheit, welche zur Abtastung analoger Daten und Erzeugung eines SV-Datenstroms geeignet ist, verwendet werden, beispielsweise eine Merging Unit.

### BEZUGSZEICHENLISTE

- 1: Vorrichtung
- 2: Netzwerkzugangsvorrichtung (Netzwerk TAP)
- 3: Bewertungsvorrichtung
- 4: Anschluss
- 5: Anschluss
- 6: Monitoring-Anschluss
- 7: Netzwerkknoten (Abtasteinheit, Merging Unit, SV-Sender)
- 8: Netzwerkknoten (SV-Empfänger)
- 9: Zeitquelle
- 10: Schutzprüfgerät
- 11: Anschluss digitale Werte
- 12: Anschluss analoge Ströme/Spannungen
- 1000: Energieerzeugungsanlage
- 1001,1002: Generatoren
- 1103: Leistungsschalter
- 1111: Leistungsschalter
- 1201,1202: Leistungstransformator
- 1211: Leistungstransformator
- 1401: Sammelschiene
- 1411: Sammelschiene
- 1412: Sammelschiene
- 1501, 1502: Hochspannungs-Übertragungsleitung
- 1600: Umspannanlage
- 1701, 1702: Leitung
- 1903: Wandler, Sensor
- 1911-1914: Wandler, Sensor
- 1952: Wandler, Sensor
- 1961: Wandler, Sensor
- 1964: Wandler, Sensor
- 1981-1984: intelligente Einheit
- 1991-1994: intelligente Einheit
- 2000: Trennlinie
- 2001: Generatorschutz (GS)
- 2002: Transformator-Differenzialschutz (TS)
- 2003: Leitungsschutz (LS)
- 2011-2013: Leitungsschutz (LS)
- 2012: Transformator-Differenzialschutz (TS)
- 2111: Kommunikationsnetzwerk
- 2211: Kommunikationsnetzwerk

## Patentansprüche

1. Verfahren zum Bewerten einer elektrischen Anlage (1981-2211) eines elektrischen Energiesystems (1000, 1600), wobei die elektrische Anlage ein Kommunikationsnetzwerk (2111, 2211) zum Übertragen von Daten umfasst, wobei das Verfahren umfasst:
- automatisches Erfassen von Echtzeitdatenübertragungen in dem Kommunikationsnetzwerk (2111,2211), und
- automatisches Bewerten der elektrischen Anlage (1981-2211) anhand der erfassten Echtzeitdatenübertragungen.

2. Verfahren nach Anspruch 1, **dadurch gekennzeichnet, dass** das Bewerten der elektrischen Anlage (1981-2211) ein Bestimmen fehlender Echtzeitdatenübertragungen umfasst.

3. Verfahren nach Anspruch 1 oder 2, **dadurch gekennzeichnet, dass** die Echtzeitdatenübertragungen jeweils automatisch an mindestens zwei unterschiedlichen Stellen des Kommunikationsnetzwerkes (2111, 2211) erfasst werden.

4. Verfahren nach einem der vorhergehenden Ansprüche, **dadurch gekennzeichnet, dass** den erfassten Echtzeitdatenübertragungen jeweils automatisch eine Zeitinformation zugeordnet wird, und
dass das Kommunikationsnetzwerk (2111, 2211) der elektrischen Anlage (1981-2211) anhand der Zeitinformationen der erfassten Echtzeitdatenübertragungen automatisch bewertet wird.

5. Verfahren nach Anspruch 4, **dadurch gekennzeichnet, dass** das Bewerten der elektrischen Anlage (1981-2211) ein Bestimmen einer statistischen Verteilung der Echtzeitdatenübertragungen bezüglich ihrer Zeitinformation umfasst.

6. Verfahren nach Anspruch 4 oder 5, **dadurch gekennzeichnet, dass** das Bewerten der elektrischen Anlage (1981-2211) ein Bestimmen eines zeitlichen Abstands zwischen aufeinanderfolgenden Echtzeitdatenübertragungen umfasst.

7. Verfahren nach einem der Ansprüche 1-6, **dadurch gekennzeichnet, dass** eine Abtasteinheit (7; 1981-1984) der elektrischen Anlage (1981-2211) einen Echtzeitabtastwert durch Abtasten einer elektrischen Größe des elektrischen Energiesystems (1000, 1600) bildet und als Echtzeitdatenübertragung über das Kommunikationsnetzwerk (2111, 2211) überträgt.

8. Verfahren nach Anspruch 7, **dadurch gekennzeichnet, dass** die Abtasteinheit (7; 1981-1984) eine Sammeleinheit umfasst, welche ausgestaltet ist, mehrere Echtzeitabtastwerte von mehreren elektrischen Größen des elektrischen Energiesystems (1000, 1600) abzutasten und als Echtzeitdatenübertragung über das Kommunikationsnetzwerk (2111, 2211) zu übertragen.

9. Verfahren nach Anspruch 8, **dadurch gekennzeichnet, dass** die Sammeleinheit (7; 1981-1984) eine Merging Unit gemäß IEC 61850 umfasst.

10. Verfahren nach Anspruch 9, **dadurch gekennzeichnet, dass** die Abtasteinheit (7, 1981-1984), die Merging Unit oder eine Sendevorrichtung der Abtasteinheit zum Übertragen der Echtzeitabtastwerte anhand der erfassten Echtzeitdatenübertragungen automatisch bewertet wird.

11. Verfahren nach einem der Ansprüche 7-10, **dadurch gekennzeichnet, dass** den erfassten Echtzeitdatenübertragungen jeweils automatisch eine Zeitinformation beim Verlassen der Abtasteinheit (7; 1981-1984) zugeordnet wird, und
dass die Abtasteinheit (7; 1981-1984) der elektrischen Anlage (1981-2211) anhand der Zeitinformation der erfassten Echtzeitdatenübertragungen automatisch bewertet wird.

12. Verfahren nach einem der Ansprüche 7-11, **dadurch gekennzeichnet, dass** die übertragenen Echtzeitdatenübertragungen von einer Netzwerkzugangsvorrichtung (2) erfasst werden, wobei die Abtasteinheit (7; 1981-1984) und die Netzwerkzugangsvorrichtung (2) mit einer Zeitquelle (9) synchronisiert werden und die Netzwerkzugangsvorrichtung (2) den Echtzeitdatenübertragungen jeweils eine Zeitinformation zuordnet.

13. Verfahren nach Anspruch 12, umfassend ein Bereitstellen eines Referenzsignals, welches eine Referenzzeitinformation umfasst,
wobei die Abtasteinheit (7; 1981-1984) das Referenzsignals abtastet und als Echtzeitdatenübertragung über das Kommunikationsnetzwerk (2111, 2211) überträgt, und
wobei die elektrische Anlage (1981-2211) anhand eines Vergleichs der Referenzzeitinformation mit der Zeitinformation der Echtzeitdatenübertragung automatisch bewertet wird.

14. Verfahren nach Anspruch 13, **dadurch gekennzeichnet, dass** das Referenzsignal einen Referenzwert umfasst,
wobei die elektrische Anlage (1981-2211) anhand eines Vergleichs von Echtzeitabtastwerten der Echtzeitdatenübertragung mit dem Referenzwert automatisch bewertet wird.

15. Verfahren nach Anspruch 13 oder 14, **dadurch gekennzeichnet, dass** das Referenzsignal von einem Schutzprüfgerät (10) bereitgestellt wird, wobei das Schutzprüfgerät (10) eine ideale Abtasteinheit simuliert, und wobei das Schutzprüfgerät (10) und die Abtasteinheit (7; 1981-1984) mit der Zeitquelle (9) synchronisiert werden.

16. Vorrichtung zum Bewerten einer elektrischen Anlage eines elektrischen Energiesystems, wobei die elektrische Anlage (1981-2211) ein Kommunikationsnetzwerk (2111, 2211) zum Übertragen von Daten umfasst, wobei die Vorrichtung (1) umfasst:
- eine Netzwerkzugangsvorrichtung (2), welche mit dem Kommunikationsnetzwerk (2111, 2211) koppelbar ist und zum Erfassen von Echtzeitdatenübertragungen in dem Kommunikationsnetzwerk ausgestaltet ist, und
- eine Bewertungsvorrichtung (3), welcher von der Netzwerkzugangsvorrichtung (2) die Echtzeitdatenübertragungen bereitgestellt werden und welche ausgestaltet ist, die elektrische Anlage (1981-2211) anhand der Echtzeitdatenübertragungen zu bewerten.

17. Vorrichtung nach Anspruch 16, wobei die elektrische Anlage (1981-2211) ferner eine Abtasteinheit (7; 1981-1984) umfasst, welche ausgestaltet ist, einen Echtzeitabtastwert durch Abtasten einer elektrischen Größe des elektrischen Energiesystems (1000, 1600) zu bilden und als Echtzeitdatenübertragung über das Kommunikationsnetzwerk (2111, 2211) zu übertragen.

18. Vorrichtung nach Anspruch 17, **dadurch gekennzeichnet, dass** die Abtasteinheit (7; 1981-1984) eine Sammeleinheit umfasst, welche ausgestaltet ist, mehrere Echtzeitabtastwerte von mehreren elektrischen Größen des elektrischen Energiesystems (1000, 1600) abzutasten und als Echtzeitdatenübertragung über das Kommunikationsnetzwerk (2111, 2211) zu übertragen.

19. Vorrichtung nach Anspruch 18, **dadurch gekennzeichnet, dass** die Sammeleinheit (7; 1981-1984) eine Merging Unit gemäß IEC 61850 umfasst.

20. Vorrichtung nach einem der Ansprüche 17-19, **dadurch gekennzeichnet, dass** die Vorrichtung (1) ferner eine Zeitquelle (9) umfasst, welche ausgestaltet ist, die Abtasteinheit (7; 1981-1984) und die Netzwerkzugangsvorrichtung (2) zu synchronisieren.

21. Vorrichtung nach Anspruch 20, umfassend ein Schutzprüfgerät (10), welches ausgestaltet ist, ein Referenzsignal bereitzustellen, welches einen Referenzwert mit einer zugeordneten Referenzzeitinformation umfasst,
wobei die Abtasteinheit (7; 1981-1984) das Referenzsignal abtastet und als Echtzeitdatenübertragung über das Kommunikationsnetzwerk (2111, 2211) überträgt, und
wobei die elektrische Anlage (1981-2211) anhand eines Vergleichs der Referenzzeitinformation mit der Zeitinformation der Echtzeitdatenübertragung automatisch bewertet wird.

22. Vorrichtung nach Anspruch 21, **dadurch gekennzeichnet, dass** das Schutzprüfgerät (10) eine ideale Abtasteinheit simuliert, wobei das Schutzprüfgerät (10) und die Abtasteinheit (7; 1981-1984) mit der Zeitquelle (9) synchronisiert werden.

23. Vorrichtung nach einem der Ansprüche 16-22, **dadurch gekennzeichnet, dass** die Vorrichtung (1) zum Durchführen des Verfahrens nach einem der Ansprüche 1-15 ausgestaltet ist.
